# EUROPEAN PATENT SPECIFICATION

(11) **EP 0 806 574 B1**
(45) Date of publication and mention of the grant of the patent: **14.11.2001**
(21) Application number: 96303195.0
(22) Date of filing: 08.05.1996
(51) Int. Cl.: F16B 5/06, F16B 37/04

(54) **Snap fastener assembly**
Rastverschuss
Fixation par clippage

(43) Date of publication of application: 12.11.1997
(73) Proprietor: Shur-Lok Corporation, Irvine, California 92714 (US)
(72) Inventor: McCorkle, Daniel J, Irvine, CA 92714 (US); Waits, Robert L, Riverside, CA 92503 (US); Rehburg, Heindrich, Orange, CA 92667 (US)
(74) Representative: Skone James, Robert Edmund

(56) References cited:
- DE-A- 3 212 160
- FR-A- 2 572 144
- US-A- 2 336 153

## Description

### 1. Field of the Invention

The present invention is directed to a fastener assembly that permits the mounting of panels in the cargo bay of aircraft and, more particularly, a two-part fastener assembly that can be quickly mounted and demounted to release the panel.

### 2. Description of Related Art

The interior walls of cargo planes, for example, as used by the military, can be subject to wear, such as abrasions and scrapes, that can occur as the maximum amount of cargo is attempted to be loaded into the bay of the cargo hold. The cargo plane walls are typically formed of approximately .06 inch thick composite surface panels. There has been a desire to use sheets of a protective plastic having various thickness ranges, for example, .04 inches in thickness, which should be easily mounted and demounted from the spars and stringers of the cargo bay. The conventional approach to this installation, has been the use of titanium bolts that extend through both a protective cover panel and the interior wall panel of the cargo bay. A clip nut is mounted in appropriate spars and stringers to enable the bolt to be threaded into the nut assembly.

Since in large planes as many as 20,000 fastener assemblies are utilized to hold the panels/liners, a substantial issue of labor in installation and removal of the panels is created. As can be appreciated, a plane can be subject to vibrations and the protective panels and its fasteners should be securely fastened. Balanced against this operational requirement is the desirability to reduce the labor time in both installing and demounting of the panels.

The prior art is still seeking an optimum solution to these opposing requirements.

US-A-2336153 discloses a fastener having a spring clip with a longitudinal slit which is positioned within a hole, the clip also having a number of prongs. A rod member is then inserted into the spring clips through a sheet to be fastened, the sheet pressing down on the clip to force the prongs into engagement with the rod member and lock it in position.

The present invention provides a removable two-part fastener for extending through and removably holding an apertured panel to extend over a wall having a bore of a predetermined dimension for receiving the fastener and providing a friction fit with the fastener, the fastener comprising:
a cylindrical C-shaped spring retainer member having a longitudinal hollow open-ended core with an exterior longitudinal slit aperture extending into the core, the exterior surface including an annular tapering section with a central enlarged portion of a greater dimension than the tapering section; and
a stud member having an enlarged head at one end and a retaining head at the other end which is interconnected by a longitudinal shaft that is dimensioned to be substantially enclosed by the spring retainer member, and to have a larger length than the spring retainer member, width dimensions of the enlarged head and the retaining head are larger than the longitudinal shaft and the open-ended core of the spring retainer member, whereby the enlarged head and the retainer head prevent the spring retainer member from being released along the longitudinal axis while the spring retainer member can be compressed during insertion into an opening to provide a locking friction force with the walls of the opening, and the spring retainer member can slide along the longitudinal shaft during extraction to permit the retaining head to exert an extraction force on the spring retainer member.

Preferably, the exterior surface of the spring retaining member has a first and a second annular tapering section that meet at a central enlarged portion of a greater diameter than the tapering sections. The enlarged head of the stud member can have an annular groove adjacent the base of the longitudinal shaft that is dimensioned to receive one end of the spring retaining member. The enlarged head and retainer head of the stud member prevent the spring retainer member from being released along the longitudinal axis whereby the spring retainer member can be compressed during insertion into an opening or bore and then can expand to provide a locking friction force for holding the protective cover to the bulkhead of a cargo bay.

The features of the present invention, which are believed to be novel, are set forth with particularity in the appended claims. The present invention, both as to its organization and manner of operation, together with further objects and advantages, may best be understood by reference to the following description, taken in connection with the accompanying drawings.
Figure 1 is a perspective view disclosing protective covers mounted on the bulkhead of a cargo bay;
Figure 2 is a perspective view of the fastener assembly of the present invention;
Figure 3 is a perspective view of the spring retainer member of the present invention;
Figure 4 is a perspective view of the stud member of the present invention;
Figure 5 is a cross-sectional view of the fastener assembly under compression as it is being mounted on the bulkhead skin of a cargo plane;
Figure 6 is a cross-sectional view of the fastener assembly installed;
Figure 7 is a schematic cross-sectional view of the fastener assembly being released with a hand tool; and
Figure 8 is a cross-sectional view of an alternative embodiment of the invention, incorporating a threaded joint.

### DETAILED DESCRIPTION OF THE PREFERRED EMBODIMENTS

The following description is provided to enable any person skilled in the art to make and use the invention and sets forth the best modes contemplated by the inventors of carrying out their invention. Various modifications, however, will remain readily apparent to those skilled in the art, since the generic principles of the present invention have been defined herein specifically to provide a cargo panel fastener.

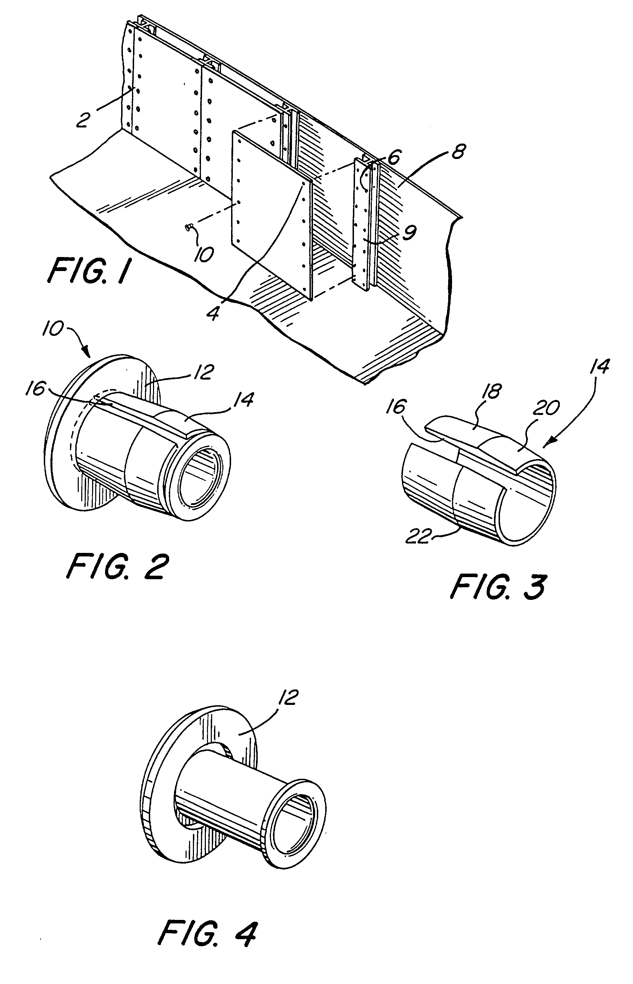

Referring to Figure 1, a schematic partial perspective view of a cargo bay of a plane is disclosed wherein panels, for example, having a .04 inches thickness of plastic sheets are mounted onto the bulkhead 8 of a plane by the fastener assembly of the present invention. The panels 2 have appropriately positioned holes or bores 4, which are juxtapositioned to align with corresponding holes or bores 6 in the bulkhead flanges 9. The fastener assembly 10 of the present invention can be quickly mounted by a force application so that the insertion operation can be performed manually by laborers, either by hand or with hand tools.

A perspective view of the fastener assembly 10 can be seen in Figure 2. The fastener assembly 10 includes a stud member 12 and a spring retainer member 14. The spring retainer member, as seen in a perspective view in Figure 3, can comprise a substantially cylindrical C-shaped metallic body, for example, made of stainless steel, such as a formable AISI 430, having a longitudinal hollow open ended core section. An exterior slit aperture 16 extends the length of the retainer member 14 to thereby enable a compression movement of the spring retainer member 14 during insertion and extraction. The exterior surface has a first annular tapering section 18 and a second annular tapering section 20. The degree of taper can be 5° relative to a longitudinal axis through the core section. A central enlarged portion or rim 22 of a greater diameter than the tapering sections and positioned between the respective tapering sections is provided. By appropriate selection of the type of material and the heat treating procedure, the spring constant of the retainer member 14 can be adjusted to provide a particular insertion force. For example, a 3/8-inch fastener can be set to have an insertion force between 25 and 35 pounds in a hole diameter of about .31 inches with a 430 stainless steel.

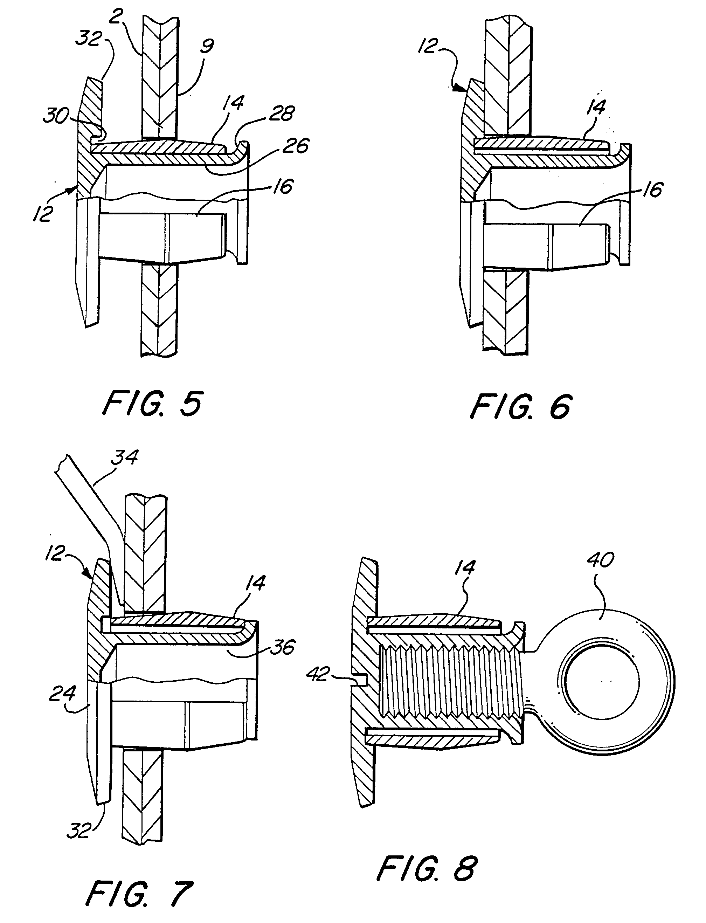

Referring to Figure 4, a perspective view of the stud member 12 is disclosed. The stud member has an enlarged head 24 with a hollow longitudinal shaft 26 terminating in a retaining head or flange 28. An annular groove 30 is formed in the enlarged head 24 at its interface with the longitudinal shaft 26. As seen in Figure 5, the stud member 12 can be machined from a unitary piece of metal, such as a 430 stainless steel. While not shown, an alternative embodiment of the present invention could have the longitudinal shaft 26 and retainer head 28 formed as one piece of material with the enlarged head 24 formed from another piece of material having a central opening. A portion of the longitudinal shaft could extend through the central opening to be cold-worked for an interconnection with the enlarged head. Other forms of manufacturing the stud member can be employed.

Again, referring to Figure 5, the spring retainer member 14 is mounted on the longitudinal shaft 26 and the open-ended portion of the longitudinal shaft 26 could be cold-worked to form the retainer head 28 for locking the spring retainer member 14 to the fastener assembly. The provision of the annular groove 30 is dimensioned to assist in centering the spring retainer member 14 and to also assist in enabling a hand-operated retraction tool to be inserted beneath or between the enlarged head 24 and a panel 2 for a simplified extraction. The relative distance between the base of the groove 30 and the enlarged head 28 keep the spring retainer member 14 within the groove 30 and permit sufficient longitudinal movement while minimizing any rattling movement of the head relative to the spring retainer member 14. The enlarged head 24 also has a tapered edge 32 to further facilitate the insertion of a removal tool 34.

In Figure 5, the spring retainer member 14 has been compressed as it is passing through a hole that is juxtapositioned between the panel 2 and the bulkhead wall or flange 9. The spring retainer member 14 is compressed during the insertion and then, as seen in Figure 6, the spring retainer member can be somewhat released, although it is still in compression, due to the dimensioning of the hole 4.

Referring to Figure 7, a removal tool 34 has been slid underneath the enlarged head 24 of the stud member 12 so that the fastener assembly can be pried from the panel 2. As can be readily appreciated, the stud member 12, in essence, is a carrier or insertion component of a fastening assembly with the exterior of the enlarged head 24 receiving the insertion force and the underside of the enlarged head 24 receiving an extraction force as a result of a lever pivoting motion by a removal tool 34. The spring retainer member 14 compresses in a direction perpendicular or traverse to the longitudinal axis of the fastener assembly and it is driven into place by the stud member 12 and then removed also by the stud member 12. The stud member 12 does not perform an active role after the retainer member has been installed, that is, the retainer member 14 is the locking member for holding the panel 2 in place.

An alternative embodiment of the present invention is disclosed in Figure 8, wherein the opening bore section 36 of the longitudinal shaft 26 can be further threaded so that it can receive a threaded bolt member 40. This embodiment of the invention would, in essence, provide an arrangement for inserting a nut through a panel so that it would receive a threaded bolt 40 from the other side of the panel to thereby provide a locking assembly. The enlarged head 24 has a slot 42 for receiving a screwdriver blade to prevent the modified stud member from turning when the bolt member 40 is inserted. As can be appreciated, any use of this embodiment of the invention would require access to both sides of the panel. As disclosed in the preferred embodiment, shown in Figure 1, only one-sided access is required for assembly and extraction of the present fastening assembly with a minimum of labor.

## Claims

1. A removable two-part fastener for extending through and removably holding an apertured panel to extend over a wall having a bore of a predetermined dimension for receiving the fastener and providing a friction fit with the fastener, the fastener comprising:
a cylindrical C-shaped spring retainer member (14) having a longitudinal hollow open-ended core with an exterior longitudinal slit aperture extending into the core, the exterior surface including an annular tapering section with a central enlarged portion of a greater dimension than the tapering section; and
a stud member (12) having an enlarged head (24) at one end and a retaining head (28) at the other end which is interconnected by a longitudinal shaft that is dimensioned to be substantially enclosed by the spring retainer member, and to have a larger length than the spring retainer member, width dimensions of the enlarged head and the retaining head are larger than the longitudinal shaft and the open-ended core of the spring retainer member, whereby the enlarged head and the retainer head prevent the spring retainer member from being released along the longitudinal axis while the spring retainer member can be compressed during insertion into an opening to provide a locking friction force with the walls of the opening, and the spring retainer member can slide along the longitudinal shaft during extraction to permit the retaining head to exert an extraction force on the spring retainer member.

2. A fastener as claimed in claim 1, wherein the enlarged head (24) has an annular groove (30) extending around the longitudinal shaft and dimensioned to receive the spring retainer member.

3. A fastener as claimed in claim 2, wherein the spring retainer member (14) can move longitudinally along the longitudinal shaft to extend into and out of the annular groove (30).

4. A fastener as claimed in any of the preceding claims, wherein the spring retainer member (14) and stud member (12) are formed of AISI 430 stainless steel.

5. A fastener as claimed in any of the preceding claims, wherein the enlarged head (24) has tapered edges.

6. A fastener as claimed in any of the preceding claims, wherein the stud member (12) has a hollow threaded opening.

7. A fastener as claimed in any of the preceding claims, wherein the enlarged head (24) has a tapered edge extending inwardly towards the spring retainer member of a dimension to enable an extraction tool to pry the stud member away from a fastened position.

8. A fastener according to any of the preceding claims. wherein the spring retainer member (14) has a substantially cylindrical outer surface with at least one annular tapering section and a central enlarged portion of a greater diameter than the tapering section, the only opening along the cylindrical outer surface is the longitudinal slit aperture.

9. A fastener according to claim 8, wherein the tapering section has a taper angle of approximately 5° relative to a longitudinal axis.

10. A wall with removable apertured panels and a removable two-part fastener according to any of the preceding claims for extending through and removably holding an apertured panel to extend over the wall, the wall having a bore of a predetermined dimension for receiving the fastener and providing a friction fit with the fastener.

11. An aircraft having a wall according to claim 10.

12. A method of mounting and removing apertured panels to a surface having a bore with a two-part fastener assembly (10) including a cylindrical spring retainer member (14) having a longitudinal hollow open-ended core with an exterior longitudinal slit aperture extending into the core, the exterior surface including an annular tapering section and a stud member (12) having an enlarged head (24) at one end and a retaining head (28) at the other end which is interconnected by a longitudinal shaft that is dimensioned to be substantially enclosed by the spring retainer member, the spring retainer member can slide along the longitudinal shaft from the enlarged head to the retaining head during insertion and retraction of the fastener assembly, comprising the steps of:
aligning an aperture of a predetermined dimension smaller than the enlarged head in the panel with the bore in the surface, the bore having a predetermined dimension to interact with the spring retainer member;
inserting the fastener in the aperture and the bore;
applying an insertion force to the enlarged head of the stud member to force the spring retainer member to compress as the spring retainer member is forced into the bore by contact with the enlarged head, whereby a frictional retention of the spring retainer member with the bore can be achieved with the enlarged head holding the panel; and
applying an extraction force to the enlarged head of the stud member to permit the stud member to slide along the longitudinal shaft until the retaining head engages the spring retaining member and force the spring retainer member to compress as it is extracted and releases the panel.

13. A method according to claim 12, wherein the fastener is constructed according to any of claims 1 to 9.

## Patentansprüche

1. Abnehmbare, zweiteilige Befestigungsvorrichtung zum Verlaufen durch und zum abnehmbaren Halten eine(r) mit einer Öffnung versehenen Platte, die über eine Wand mit einer Bohrung einer vorbestimmten Abmessung zur Aufnahme der Befestigung und zum Bereitstellen einer Reibungspassung mit der Befestigungsvorrichtung verlaufen soll, welche Befestigungsvorrichtung aufweist:
ein zylindrisches C-förmiges Federrückhalteglied (14) mit einem länglichen, hohlen, offen-endigen Kern mit einer äußeren, länglichen Schlitzöffnung, die sich in den Kern hinein erstreckt, wobei die äußere Oberfläche einen ringförmigen, zugespitzen Abschnitt mit einem mittleren vergrößerten Abschnitt einer größeren Abmessung als der zugespitzte Abschnitt aufweist, und
ein Bolzenglied (12) mit einem vergrößerten Kopf (24) an einem Ende und einem Rückhaltekopf (28) an dem anderen Ende, die miteinander durch einen länglichen Schaft verbunden sind, der bemessen ist, um im wesentlichen von dem Federrückhalteglied umschlossen zu werden und eine größere Länge als das Federrückhalteglied zu haben, wobei Breitenabmessungen des vergrößerten Kopfes und des Rückhaltekopfes größer sind als der längliche Schaft und der offen-endige Kern des Federrückhaltegliedes, wodurch der vergrößerte Kopf und der Rückhaltekopf vermeiden, daß das Federrückhalteglied entlang der Längsachse gelöst wird, während das Federrückhalteglied während eines Einführens in eine Öffnung zusammengedrückt werden kann, um eine Verriegelungs-Reibungs-Kraft mit den Wänden der Öffnung bereitzustellen, und das Federrückhalteglied entlang des länglichen Schaftes während eines Herausziehens gleiten kann, um es für den Rückhaltekopf zu gestatten, eine herausziehende Kraft auf das Federrückhalteglied auszuüben.

2. Befestigungsvorrichtung wie in Anspruch 1 beansprucht, bei der der vergrößerte Kopf (24) eine ringförmige Vertiefung (30) hat, die sich um den länglichen Schaft herum erstreckt und zur Aufnahme des Federrückhaltegliedes bemessen ist.

3. Befestigungsvorrichtung wie in Anspruch 2 beansprucht, bei der das Federrückhalteglied (14) sich längs entlang dem länglichen Schaft bewegen kann, um sich in die ringförmige Vertiefung (30) hinein und aus ihr heraus zu erstrecken.

4. Befestigungsvorrichtung wie in irgendeinem der vorhergehenden Ansprüche beansprucht, bei der das Federrückhalteglied (14) und das Bolzenglied (12) aus rostfreiem Stahl AISI 430 gebildet sind.

5. Befestigungsvorrichtung wie in irgendeinem der vorhergehenden Ansprüche beansprucht, bei der der vergrößerte Kopf (24) zugespitzte Kanten hat.

6. Befestigungsvorrichtung wie in irgendeinem der vorhergehenden Ansprüche beansprucht, bei der das Bolzenglied (12) eine hohle, mit einem Gewinde versehene Öffnung hat.

7. Befestigungsvorrichtung wie in irgendeinem der vorhergehenden Ansprüche beansprucht, bei der der vergrößerte Kopf (24) eine zugespitzte Kante hat, die sich einwärts in Richtung auf das Federrückhalteglied mit einer Abmessung erstreckt, um es einem Herauszieh-Werkzeug zu gestatten, das Bolzenglied aus einer befestigten Position herauszuheben.

8. Befestigungsvorrichtung nach irgendeinem der vorhergehenden Ansprüche, bei der das Federrückhalteglied (14) eine im wesentlichen zylindrische äußere Oberfläche mit mindestens einem ringförmigen, zugespitzten Abschnitt und einen mittleren, vergrößerten Abschnitt eines größeren Durchmessers als der zugespitzte Abschnitt hat, wobei die einzige Öffnung entlang der zylindrischen, äußeren Oberfläche die längliche Schlitzöffnung ist.

9. Befestigungsvorrichtung nach Anspruch 8, bei der der zugespitzte Abschnitt einen Neigungswinkel von etwa 5° relativ zu einer Längsachse hat.

10. Wand mit abnehmbaren, mit einer Öffnung versehenen Platten und einer abnehmbaren, zweiteiligen Befestigungsvorrichtung nach irgendeinem der vorhergehenden Ansprüche zum Verlaufen durch und zum abnehmbaren Halten einer mit einer Öffnung versehenen Platte, die über die Wand verlaufen soll, wobei die Wand eine Bohrung einer vorbestimmten Abmessung zur Aufnahme der Befestigungsvorrichtung und zum Bereitstellen einer Reibungspassung mit der Befestigungsvorrichtung hat.

11. Luftfahrzeug mit einer Wand nach Anspruch 10.

12. Verfahren zum Anbringen und Abnehmen mit einer Öffnung versehener Platten an/von einer Oberfläche, die eine Bohrung hat, mit einer zweiteiligen Befestigungsanordnung (10), die ein zylindrisches Federrückhalteglied (14) mit einem länglichen, hohlen, offen-endigen Kern und eine äußere, längliche Schlitzöffnung hat, die in den Kern hineinverläuft, wobei die äußere Oberfläche einen ringförmigen, zugespitzten Abschnitt aufweist, und ein Bolzenglied (12) mit einem vergrößerten Kopf (24) an einem Ende und einem Rückhaltekopf (28) an dem anderen Ende, die miteinander durch einen länglichen Schaft verbunden sind, der so bemessen ist, daß er im wesentlichen von dem Federrückhalteglied umschlossen ist, wobei das Federrückhalteglied entlang dem länglichen Schaft von dem vergrößerten Kopf zu dem Rückhaltekopf während eines Einführens und eines Zurückziehens der Befestigungsanordnung gleiten kann, umfassend die Schritte:
Ausrichten einer Öffnung einer vorbestimmten Abmessung, kleiner als der vergrößerte Kopf, in der Platte auf die Bohrung in der Oberfläche, wobei die Bohrung eine vorbestimmte Abmessung hat, um mit dem Federrückhalteglied zusammenzuwirken,
Einführen der Befestigungsvorrichtung in die Öffnung und die Bohrung,
Ausüben einer Einführungskraft auf den vergrößerten Kopf des Bolzengliedes, um das Federrückhalteglied zu einem Zusammendrücken zu zwingen, wenn das Federrückhalteglied durch einen Kontakt mit dem vergrößerten Kopf in die Bohrung gezwungen wird, wodurch eine Reibungs-Sicherung des Federrückhaltegliedes mit der Bohrung erreicht werden kann, wobei der vergrößerte Kopf die Platte hält, und
Ausüben einer herausziehenden Kraft auf den vergrößerten Kopf des Bolzengliedes, um es für das Bolzenglied zu gestatten, entlang dem länglichen Schaft zu gleiten, bis der Rückhaltekopf mit dem Federrückhalteglied in Eingriff gelangt, und das Federrückhalteglied zum Zusammendrücken zu zwingen, wenn es herausgezogen wird und die Platte freigibt.

13. Verfahren nach Anspruch 12, bei dem die Befestigungsvorrichtung gemäß irgendeinem der Ansprüche 1 bis 9 aufgebaut ist.

## Revendications

1. Fixation amovible en deux parties destinée à s'étendre à travers et à retenir de manière amovible un panneau à ouvertures destiné à s'étendre par-dessus une paroi ayant un alésage d'une dimension prédéterminée pour recevoir la fixation et fournir un ajustement par friction avec la fixation, la fixation comprenant :
un élément d'attache de ressort cylindrique en forme de C (14) ayant une âme creuse longitudinale à extrémité ouverte avec une ouverture de fente longitudinale extérieure s'étendant dans l'âme, la surface extérieure comprenant une section conique annulaire avec une partie centrale agrandie d'une plus grande dimension que la section conique ; et
un élément de tourillon (12) ayant une tête agrandie (24) à une extrémité et une tête de retenue (28) à l'autre extrémité qui est interconnectée par un arbre longitudinal qui est dimensionné pour être sensiblement enfermé par l'élément d'attache de ressort, et pour avoir une longueur plus grande que l'élément d'attache de ressort, les dimensions de largeur de la tête agrandie et de la tête de retenue étant plus grandes que celles de l'arbre longitudinal et de l'âme à extrémité ouverte de l'élément d'attache de ressort, de telle manière que la tête agrandie et la tête de retenue empêchent l'élément d'attache de ressort d'être libéré le long de l'axe longitudinal tandis que l'élément d'attache de ressort peut être comprimé pendant l'insertion dans une ouverture pour créer une force de friction de verrouillage avec les parois de l'ouverture, et que l'élément d'attache de ressort peut coulisser le long de l'arbre longitudinal pendant l'extraction pour permettre à la tête de retenue d'exercer une force d'extraction sur l'élément d'attache de ressort.

2. Fixation selon la revendication 1, dans laquelle la tête agrandie (24) présente une rainure annulaire (30) s'étendant autour de l'arbre longitudinal et dimensionnée pour recevoir l'élément d'attache de ressort.

3. Fixation selon la revendication 2, dans laquelle l'élément d'attache de ressort (14) peut se déplacer longitudinalement le long de l'arbre longitudinal pour s'étendre dans et hors de la rainure annulaire (30).

4. Fixation selon l'une quelconque des revendications précédentes, dans laquelle l'élément d'attache de ressort (14) et l'élément de tourillon (12) sont formés en acier inoxydable AISI 430.

5. Fixation selon l'une quelconque des revendications précédentes, dans laquelle la tête agrandie (24) possède des bords coniques.

6. Fixation selon l'une quelconque des revendications précédentes, dans laquelle l'élément de tourillon (12) possède une ouverture filetée creuse.

7. Fixation selon l'une quelconque des revendications précédentes, dans laquelle la tête agrandie (24) possède un bord conique s'étendant vers l'intérieur vers l'élément d'attache de ressort d'une dimension permettant à un outil d'extraction de faire sortir par effet levier l'élément de tourillon d'une position fixée.

8. Fixation selon l'une quelconque des revendications précédentes, dans laquelle l'élément d'attache de ressort (14) présente une surface extérieure sensiblement cylindrique avec au moins une section conique annulaire et une partie centrale agrandie d'un plus grand diamètre que la section conique, la seule ouverture le long de la surface extérieure cylindrique étant l'ouverture de fente longitudinale.

9. Fixation selon la revendication 8, dans laquelle la section conique présente un angle de conicité d'environ 5° par rapport à l'axe longitudinal.

10. Paroi munie de panneaux à ouvertures amovibles et d'une fixation amovible en deux parties selon l'une quelconque des revendications précédentes, s'étendant à travers et retenant de manière amovible un panneau à ouvertures destiné à s'étendre par-dessus la paroi, la paroi comportant un alésage d'une dimension prédéterminée pour recevoir la fixation et créer un ajustement par friction avec la fixation.

11. Avion ayant une paroi selon la revendication 10.

12. Procédé de fixation et de retrait de panneaux à ouvertures sur/d'une surface ayant un alésage avec un ensemble de fixation en deux parties (10) comprenant un élément d'attache de ressort cylindrique (14) ayant une âme creuse longitudinale à extrémité ouverte avec une ouverture de fente longitudinale extérieure s'étendant dans l'âme, la surface extérieure comprenant une section conique annulaire, et un élément de tourillon (12) ayant une tête agrandie (24) à une extrémité et une tête de retenue (28) à l'autre extrémité qui est interconnectée par un arbre longitudinal qui est dimensionné pour être sensiblement enfermé par l'élément d'attache de ressort, l'élément d'attache de ressort pouvant glisser le long de l'arbre longitudinal de la tête agrandie à la tête de retenue pendant l'insertion et le retrait de l'ensemble de fixation, comprenant les étapes consistant à :
aligner une ouverture d'une dimension prédéterminée plus petite que la tête agrandie dans le panneau avec l'alésage dans la surface, l'alésage ayant une dimension prédéterminée pour interagir avec l'élément d'attache de ressort ;
insérer la fixation dans l'ouverture et l'alésage ;
appliquer une force d'insertion sur la tête agrandie de l'élément de tourillon pour forcer l'élément d'attache de ressort à se comprimer lorsque l'élément d'attache de ressort est poussé dans l'alésage par contact avec la tête agrandie, de telle sorte qu'une retenue par friction de l'élément d'attache de ressort avec l'alésage puisse être réalisée avec la tête agrandie retenant le panneau ; et
appliquer une force d'extraction sur la tête agrandie de l'élément de tourillon pour permettre à l'élément de tourillon de glisser le long de l'arbre longitudinal jusqu'à ce que la tête de retenue vienne en prise avec l'élément d'attache de ressort et force l'élément d'attache de ressort à se comprimer lorsqu'il est extrait et libère le panneau.

13. Procédé selon la revendication 12, dans lequel la fixation est construite selon l'une quelconque des revendications 1 à 9.
